# EUROPEAN PATENT SPECIFICATION

(11) **EP 3 179 077 B1**
(45) Date of publication and mention of the grant of the patent: **12.09.2018**
(21) Application number: 15382618.5
(22) Date of filing: 11.12.2015
(51) Int. Cl.: F02C 7/22, F02C 7/232, F02C 9/28, F02C 9/30

(54) **FUEL CONTROL SYSTEM FOR A GAS TURBINE ENGINE OF AN AIRCRAFT**
KRAFTSTOFFREGELSYSTEM FÜR GASTURBINENMOTOR EINES FLUGZEUGS
SYSTÈME DE COMMANDE DE CARBURANT POUR UN MOTEUR À TURBINE À GAZ D'AÉRONEF

(43) Date of publication of application: 14.06.2017
(73) Proprietor: Airbus Operations, S.L., 28906 Getafe (Madrid) (ES)
(72) Inventor: DEMELAS, Salvatore, 28906 GETAFE (Madrid) (ES)
(74) Representative: Carpintero Lopez, Francisco

(56) References cited:
- EP-A2- 2 514 948
- EP-A2- 2 541 024
- WO-A1-93/07373
- US-A- 4 508 127

## Description

### Object of the invention

The present invention refers to a new fuel control, pressurization and dispensing system for a gas turbine engine of an aircraft, in particular, for those aircrafts whose auxiliary power unit and/or main engine fuel control systems comprise a mechanical fuel control unit (FCU), a fuel controller (such as an Engine Electronic Unit (ECU)), and a plurality of nozzles for dispensing the pressurized fuel received from the FCU into the engine combustion chamber.

An object of the invention is to provide a fuel control system that improves the performance and emission of conventional gas turbine engines, by decoupling the efficiency of the fuel pressurization and delivery into the combustion chamber from the operating phase (start, cooldown, idle, working,..) and load condition (step load, full load, partial load, ...).

Another object of the present invention is to provide a fuel control system that minimizes the weight of conventional fuel control systems, at the same time that simplifies the system, and avoids using the mechanical fuel control unit, allowing saving costs and space when installed in the aircraft.

### Background of the invention

The auxiliary power unit (APU) is a gas turbine engine that supplies electrical and pneumatic power to the aircraft systems as an auxiliary or secondary source of power. The APU allows the aircraft to be autonomous of external electric and pneumatic power sources on ground and in-flight.

Conventionally, the APU fuel control system is mainly a mechanical system where the fuel controller controls the engine by modulating the fuel pressure delivered to the nozzles from the fuel control unit.

Currently used fuel control units need to ensure the fuel is mechanically pressurized, filtered, regulated, distributed to the primary and secondary engine fuel manifolds and recovered during engine shutdown to avoid fuel vapour release into the environment (ecology valve). Additionally, to ensure a reliable operation, said fuel control units need to include additional mechanical valves (pressure relief, shutoff...). These requirements convert conventional FCUs into a highly complex and heavy mechanical element that is mechanically driven by the engine accessory gearbox.

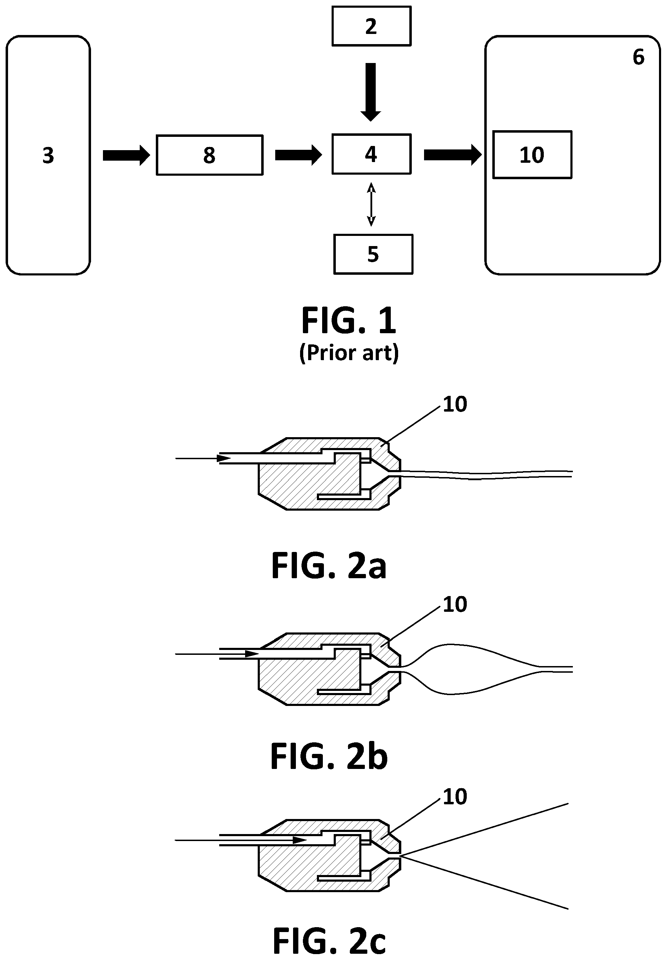

As shown in Figure 1, a conventional fuel control system comprises a fuel tank (3) containing fuel, a FCU (4), an APU DC fuel pump (8) for feeding the FCU (4) from the fuel tank (3) when main engine fuel pumps are off, an APU gearbox (2) to mechanically drive the FCU (4), at least one nozzle (10) for dispensing the pressurized fuel received from the FCU (4) into the APU combustion chamber (6), and said APU combustion chamber (6). Additionally, conventional systems comprise a fuel controller (5) adapted to modulate the fuel pressure delivered to the nozzles (10) by actuating on the FCU (4).

However, the performance and emission of these conventional systems depends on the APU operating phase (start, cooldown, idle, working...) and the APU load condition (step load, full load, partial load...), since nozzles only reach optimum fuel atomization when the APU is in continuous operation with a high load condition. In such conditions, nozzles are supplied with the highest pressure, allowing the best fuel atomization and dispensing fuel droplets of minimum size.

Figure 2 shows a conventional nozzle (10) dispensing fuel at different pressures. In Figure 2a the nozzle (10) is supplied with a low pressure of fuel. In Figure 2b the nozzle (10) is supplied with a medium pressure of fuel. And in Figure 2c the nozzle (10) is supplied with a high pressure of fuel. As represented, when a nozzle is supplied with high pressure, the atomization pattern is extended covering great areas and dispensing droplets of minimum size.

An example of a control for providing fuel to an APU can be found in the European patent application No. EP-2541024-A2, the control includes a constant speed electrical motor, a first pump driven by the motor and a second pump driven by the motor, wherein the electric motor, the first pump and the second pump provide fuel at sufficient pressure/flow capacity to run the APU.

Therefore it would be desirable to provide technical means that achieves best performance and emission of conventional gas turbine engines at any operating and load state of the engine. Also, it would be desirable to simplify conventional fuel control systems, and reduce the associated weight while minimizing the cost of traditional fuel control systems.

### Summary of the invention

The present invention overcomes the above mentioned drawbacks by providing a fuel control system in accordance with the features of claim 1, that improves the performance and emission of a gas turbine engine, at the same time that provides a simplified system with respect to conventional systems, and achieves a weight and cost reduction.

The invention refers to a fuel control system for a gas turbine engine of an aircraft that comprises an engine having a gearbox and a combustion chamber, and a fuel tank for containing fuel. According to the invention, the system further comprises a high pressure fuel pump to pump fuel from the fuel tank towards the combustion chamber, at least one electrically controlled fuel injector to inject a flow rate of the pumped fuel into the combustion chamber, a fuel pressure sensor placed to sense the pressure of the pumped fuel, a fuel temperature sensor placed to sense the temperature of the pumped fuel, and a fuel controller electrically coupled with the fuel pressure and temperature sensors to calculate the fuel density according to the sensed values. Also, the fuel controller is electrically coupled with the at least one fuel injector to determine the fuel flow injection rate. The fuel controller is adapted to calculate the quantity of the injected fuel, according to the fuel density and the fuel flow injection rate. Further, the fuel controller is electrically coupled with the fuel pump to establish a pump output pressure value, according to the quantity of the injected fuel, such that a constant fuel pressure value is supplied to the at least one fuel injector, in order to inject a constant fuel injection pressure in the combustion chamber.

The fuel controller is coupled with both the fuel pressure sensor and the fuel temperature sensor to calculate the pumped fuel density, and with the at least one fuel injector to measure the rate of injection that is being delivered by said injector. Based on the fuel density and on the flow injection rate, the fuel controller is capable of calculating the quantity of fuel that is being directly injected in the combustion chamber. According to this, the fuel controller is further adapted to establish an output pressure value on the fuel pump, such that a constant fuel pressure value is supplied to the at least one fuel injector. Thus, a constant fuel injection pressure is injected into the combustion chamber. This way, the required fuel injection rate is reliably injected at any time in the combustion chamber by the at least one fuel injector.

This way, the invention enables that the at least one fuel injector constantly works at a maximum fuel pressure, so that an optimum fuel atomization in all engine operating conditions (speed/load) is ensured. This upgrade in the fuel atomization improves the overall performance of the gas turbine engine.

Providing a fuel controller that is adapted to monitor the fuel pressure, the fuel temperature, and the flow rate injected in the combustion chamber, and that is also adapted to calculate a pump output pressure value so as the at least one fuel injector is supplied with a constant fuel pressure value, the invention avoids the need of the FCU.

Since the FCU is a highly complex and heavy mechanical element that is mechanically driven by the gearbox, the invention confers the system with a weight and simplicity improvement, and also with a better response of the engine at any speed or load condition. Additionally, the invention decouples the fuel atomization from the engine operation.

Further, by providing a high pressure fuel pump, the invention allows removing the DC powered fuel pump, which conventionally feeds the FCU from the fuel tanks when the fuel pumps of the main engines are off.

Without needing the FCU and the DC powered fuel pump, the invention simplifies the fuel control system, and allows reducing installation, recurrent, and direct costs of the mentioned components, and also of those other components required for their functioning. Thus, the invention reduces also the maintenance costs involved by conventional systems.

Additionally, the invention achieves a significant weight reduction by dispensing with the FCU and the DC powered fuel pump, and, in turned only requiring a simple high pressure fuel pump.

Moreover, providing a fuel control system that only requires a high pressure fuel pump instead of the FCU and the DC powered fuel pump, the invention enables saving space, thereby offering extra room for either harness routing for any other new or existing aircraft system, or placing any new or existing aircraft equipment's.

### Brief description of the drawings

For a better comprehension of the invention, the following drawings are provided for illustrative and non-limiting purposes, wherein:
Figure 1 shows a schematic view of a conventional fuel control system for an auxiliary power unit of an aircraft, in which a FCU, an APU DC powered fuel pump, and at least one nozzle is used for dispensing fuel from the fuel tank into the APU combustion chamber.
Figure 2 shows a schematic view of different patterns of fuel atomization by a nozzle, which is supplied by different fuel pressures.
Figure 3 shows a schematic view of a fuel control system according to an embodiment of the present invention.
Figure 4 shows a schematic view of a fuel control system according to another embodiment of the present invention.
Figure 5 shows a typical distribution pattern of the droplet size obtained by conventional nozzles.
Figure 6 shows a droplet pattern of a high pressure injection by the at least one electrically controlled fuel injector.

### Preferred embodiment of the invention

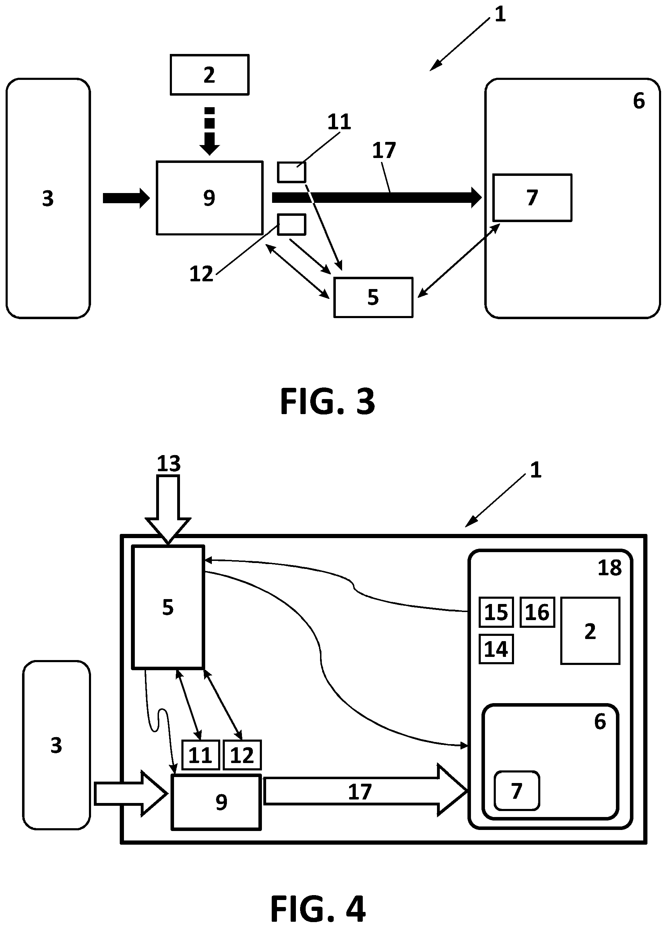

Figure 3 shows a schematic view of a fuel control system 1 for a gas turbine engine of an aircraft according to the invention. As conventionally, the fuel control system 1 of Figure 3 comprises an engine 18 having a gearbox 2 and a combustion chamber 6, and a fuel tank 3 for containing fuel. Additionally, and according to the invention, the system 1 further comprises a high pressure fuel pump 9, at least one electrically controlled fuel injector 7, a fuel pressure sensor 11, a fuel temperature sensor 12, and a fuel controller 5. The high pressure fuel pump 9 is connected to the fuel tank 3 for pumping fuel from the tank 3 towards the combustion chamber 6. The at least one electrically controlled fuel injector 7 receives the pumped fuel from the fuel pump 9, and is suitable to inject a controllable flow rate of fuel into the combustion chamber 6. The fuel pressure sensor 11 and the fuel temperature sensor 12 are placed to respectively sense the pressure and temperature of the pumped fuel. Finally, as shown, the fuel controller 5 is electrically coupled with the fuel pump 9, the fuel pressure sensor 11, the fuel temperature sensor 12, and the at least one fuel injector 7. The fuel controller 5 is adapted to calculate the fuel density according to the sensed pressure and temperature values, and to determine the fuel flow injection rate by its coupling with the at least one fuel injector 7. From both parameters, the fuel density and the fuel flow injection rate, the fuel controller 5 is adapted to calculate the quantity of injected fuel to establish a pump output pressure value such that a constant fuel pressure value is supplied to the at least one fuel injector 7. Thus, a constant fuel injection pressure is injected in the combustion chamber 6 by the at least one fuel injector 7.

Thus, the fuel control system 1 achieves supplying a high constant fuel pressure to the at least one fuel injector 7, and thereby, dispensing a constant high fuel injection pressure into the combustion chamber 6.

This way, an optimum fuel atomization (minimum fuel droplet size) is achieved at any operating phase and/or load condition of the engine. Thus, contrary to the state of the art, the emissions and performance of the fuel control system are no longer dependant of the operating phase and/or load conditions of the engine.

The fuel controller 5 is further adapted to regulate the fuel flow injection rate of the at least one fuel injector 7 for supplying the at least one fuel injector 7 with a high constant fuel pressure value. By regulating the fuel flow injection rate, the fuel controller 5 regulates the quantity of injected fuel.

This way, in this embodiment, the fuel controller 5 is adapted to control both the output pressure of the pumped fuel 9, and the fuel flow of the at least one fuel injector 7, for supplying the at least one fuel injector 7 with a high constant fuel pressure value. Thus, the fuel flow rate of the fuel injector 7 can be varied by the fuel controller 5 for obtaining the desired instantaneous fuel quantity while ensuring a constant input pressure value with which is supplied the at least one fuel injector 7.

According to another preferred embodiment, the engine 18 further comprises a shaft and the fuel control system 1 further comprises an engine speed sensor 14, wherein the engine speed sensor 14 is coupled to the engine 18 to sense the instantaneous shaft speed value , and wherein the fuel controller 5 is further adapted to receive instantaneous engine load information 13 and to modify the fuel pump output pressure value considering load and speed values for supplying a constant fuel pressure value to the at least one fuel injector 7. The engine load information 13 can be estimated based on the fuel needed to keep the required engine speed at a given electrical and pneumatic load. This engine load information 13 can be provided by external signals, such as the airflow demand for the engine, or the thrust demand for the main engines.

Preferably, according to another preferred embodiment, the fuel controller 5 is adapted to modify both the output pressure of the fuel pump 9 and the fuel flow rate of the at least one fuel injector 7, considering the load and speed values of the gas turbine engine in addition to the density and the flow injection rate of the pumped fuel.

Preferentially, if the fuel control system 1 comprises the engine speed sensor 14 and receives the engine load information, the fuel controller 5 is further adapted to modify the duty cycle of the fuel pump 9 according to the load and speed values for that a constant fuel pressure value is supplied to the at least one fuel injector 7. This way, the invention allows reducing the power consumption of the fuel pump, passing from a fuel pump in continuous maximum pressure operation, to a fuel pump with lower pressure operation.

In addition, in a preferred embodiment, the fuel pump 9 comprises input valves for receiving fuel to be pumped, and the fuel controller 5 is further adapted to reduce the pump input fuel flow through at least one of said fuel pump input valves, according to the load and/or speed values. This way, the invention further optimizes the high pressure pump power consumption.

According to another preferred embodiment, the fuel control system 1 further comprises an input airflow pressure 15 and air temperature sensor 16, both located in an engine air inlet, to respectively sense pressure and temperature values of the input airflow, and wherein the fuel controller 5 is further adapted to modify the fuel pump output pressure value considering the inlet airflow pressure and/or temperature values, for supplying a constant fuel pressure value to the at least one fuel injector 7.

Preferably, the fuel controller 5 is adapted to modify both the output pressure of the fuel pump 9 and the fuel flow rate of the at least one fuel injector 7, considering the monitored engine air inlet pressure and temperature values to optimize the fuel injection flow rate taking into account the computed air density in addition to the load and speed values.

Preferably, the fuel control system 1 comprises a plurality of fuel injectors 7, and the fuel controller 5 is adapted to individually control the fuel flow rate of each one of the injectors 7.

Preferably, as shown in Figure 3, the fuel pressure sensor 11 and the fuel temperature sensor 12 are coupled to a pipeline 17 that connects the fuel pump 9 with the at least one fuel injector 7.

Alternatively, as shown in Figure 4, the fuel pressure sensor 11 and the fuel temperature sensor 12 are coupled to an output of the fuel pump 9.

According to another preferred embodiment, the fuel pump 9 is a mechanical pump, which is mechanically driven by the gearbox 2.

Alternatively, the fuel pump 9 is an electrical pump. In such a case, the fuel pump 9 can be decoupled from the gearbox 2 and can be located close to the fuel tanks. The electrically powered fuel pump allows better control of the delivered fuel pressure, since it has no relation with the engine speed. Also, the electrical pump helps to save energy in case of low fuel demand.

According to another preferred embodiment, the fuel control system 1 further comprises a linear motor, and the fuel pump 9 is driven by said linear motor. A linear motor has a single friction point, involving fewer losses, less acoustic noise, and greater reliability.

According to another preferred embodiment, the at least one fuel pump 9 is integrated into each injector 7 of the at least one fuel injector 7 to form a pump-injector element. The pumping element can also be driven by a linear motor. With this embodiment, the system offers:
- weight saving, by providing small size pumps (suitable for being integrated into the injectors),
- engine gearbox simplification,
- higher efficiency, since no mechanical power is taken from the engine shaft to drive the mechanical fuel pump, and the electrical pumps will pressurize only the needed fuel amount, and
- higher reliability, since an independent set of pump-injectors could allow engine operability after a single pumping element failure.

In a preferred embodiment, the gas turbine engine consists of an auxiliary power unit.

Finally, according to another aspect of the present invention, the invention further comprises an aircraft comprising the fuel control system 1 as described.

With respect to existing fuel control architectures, the fuel control system of the invention presents the following advantages:
- The current FCU is removed providing weight and system reliability improvements.
- Increased idle and full load performance/consumption/emission due to the improved fuel atomization independently of the turbomachine workload.
- When the fuel injectors are not energized there's no fuel leaks into the combustion chamber which avoids release of fuel into the external environment, this justifies the removal of the FCU and its fuel ecology valves that is typically used to drain back the fuel from the manifolds after the engine shutdown (weight and complexity reduction) and the phenomenon of the nozzles fuel cooking during engine shutdown is also avoided allowing a better long term combustion efficiency and engine start reliability.
- Better start and hot restart performances due to improved fuel atomization at any engine load/speed condition.
- Better engine response to strong and step load transients due to the fact that the fuel injection rate is directly controlled on the combustion side and not on the fuel pump side.
- Weight reduction due to the lower complexity of the fuel control system.
- Increased components installation flexibility, since the high pressure electric fuel pump does not need to be close to the engine zone.
- Simplicity/reliability/weight improvement due to lower components count.
- Engine accessory gearbox simplification and weight reduction (no mechanical FCU to drive).
- The fuel recirculation can be greatly reduced (if needed by the architecture of a specific fuel pressure powered engine actuator, or totally eliminated (return fuel manifolds can be removed). Fuel pump load can be optimized in line with the instantaneous engine need.
- If used, the engine fuel pressure powered actuators are not subject to fuel pressure variation which can alter their mechanical reaction time (which reduces the control loop fidelity and increases the engines SW regulation algorithm complexity).
- Continuous control of the fuel quantity ensuring a regulated fuel flow is constantly injected at the maximum pressure independently of the engine load/speed, which provides a higher engine efficiency.
- Engine Nozzles/Injectors fuel return manifolds can be removed, which provides a weight saving.
- High injection pressures increase the turbulence energy of the spray, which reduces the need of swirl energy losses in the combustor in order to produce the correct air-fuel mixture, which provides higher engine efficiency.

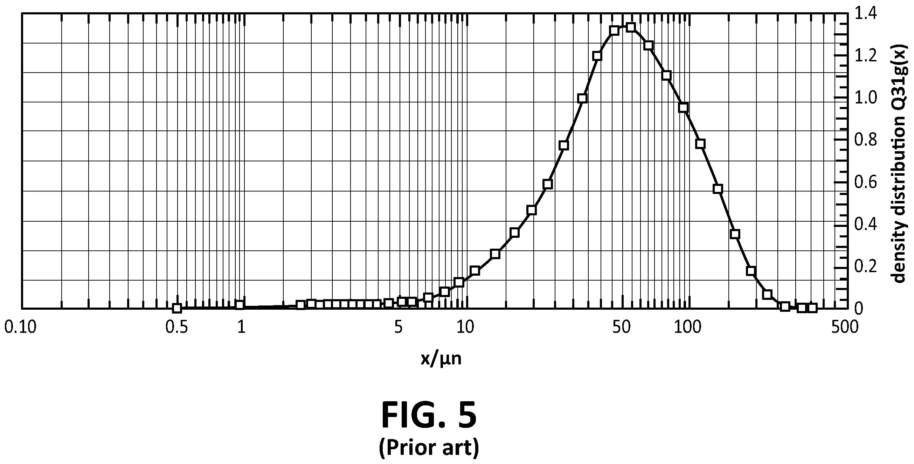

Figure 5 shows the droplet size obtained by conventional nozzles. The horizontal axis is a logarithmic scale of particle size x in µm. The vertical axis on the right side is a linear scale of distribution density Q31g(x) as a function of the particle size x.

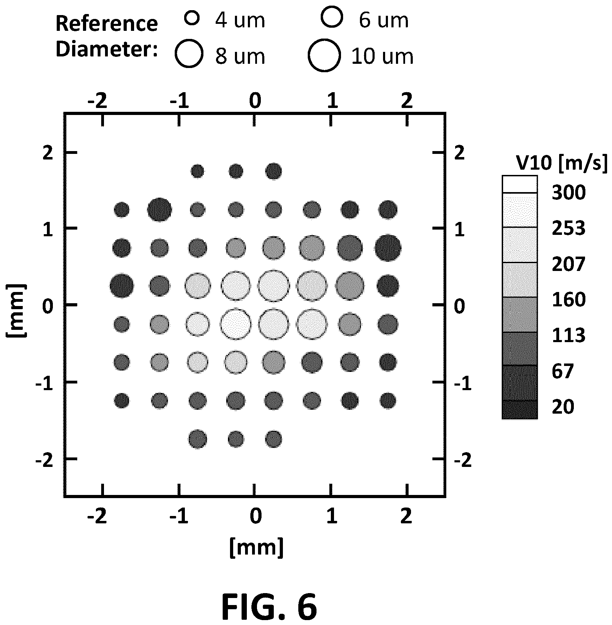

Figure 6 shows a typical droplet pattern of a high pressure injection by the at least one electrically controlled fuel injector.

As shown, the droplet size of the fuel injectors of Figure 6 is almost an order of magnitude lower than the size obtainable with the traditional nozzles of Figure 5.

Besides improving the engine performance and emissions, the much lower average droplet size is greatly beneficial to ensure a constant and higher flame speed. The increased flame speed has also the following benefits:
- reduced risk of flameout, and higher allowable combustor flow velocity,
- reduced internal combustor pressure losses, and higher turbine input pressure),
- increase of general thermal efficiency, and
- a more compact and lighter engine combustor with lower pressure losses (including the reduced swirl turbulence need) due to the higher flow and flame speed.

## Claims

1. A fuel control system (1) for a gas turbine engine of an aircraft comprising:
- an engine (18) having a gearbox (2) and a combustion chamber (6),
- a fuel tank (3) for containing fuel,
- a high pressure fuel pump (9) to pump fuel from the fuel tank (3) towards the combustion chamber (6), and
- a fuel pressure sensor (11) placed to sense the pressure of the pumped fuel,
**characterized in that** the system (1) further comprises
- at least one electrically controlled fuel injector (7) to inject a flow rate of the pumped fuel into the combustion chamber (6),
- a fuel temperature sensor (12) placed to sense the temperature of the pumped fuel, and
- a fuel controller (5) electrically coupled with the fuel pressure and temperature sensors (11, 12) to calculate the fuel density according to the sensed values,
- wherein the fuel controller (5) is electrically coupled with the at least one fuel injector (7) to determine the fuel flow injection rate,
- wherein the fuel controller (5) is adapted to calculate the quantity of the injected fuel, according to the fuel density and the fuel flow injection rate,
- wherein the fuel controller (5) is electrically coupled with the fuel pump (9) to establish a pump output pressure value, according to the quantity of the injected fuel, such that a constant fuel pressure value is supplied to the at least one fuel injector (7) in order to inject a constant fuel injection pressure into the combustion chamber (6), and
- wherein the fuel controller (5) is further adapted to regulate the fuel flow injection rate of the at least one fuel injector (7) for supplying the at least one fuel injector (7) with a constant fuel pressure value.

2. A fuel control system (1) according to claim 1, wherein the engine (18) comprises a shaft, and wherein the system (1) further comprises an engine speed sensor (14) coupled to the engine (18) to sense instantaneous speed value of the engine shaft, and wherein the fuel controller (5) is further adapted to receive instantaneous engine load information (13) and to modify the fuel pump output pressure value considering the load and speed values for supplying a constant fuel pressure value to the at least one fuel injector (7).

3. A fuel control system (1) according to claim 2, wherein the fuel controller (5) is further adapted to modify the duty cycle of the fuel pump (9) according to the load and speed values for that a constant fuel pressure value is supplied to the at least one fuel injector (7).

4. A fuel control system (1) according to any of claims 2 - 3, wherein the fuel pump (9) comprises input valves for receiving fuel to be pumped, and wherein the fuel controller (5) is further adapted to reduce the pump input fuel flow through at least one of said fuel pump input valves according to the load and/or speed values.

5. A fuel control system (1) according to any of the preceding claims, wherein further comprises an inlet airflow pressure (15) and an air temperature sensor (16), both located in an engine air inlet to respectively sense pressure and temperature values of an input airflow, and wherein the fuel controller (5) is further adapted to modify the fuel pump output pressure value considering the inlet airflow pressure and temperature values, for supplying a constant fuel pressure value to the at least one fuel injector (7).

6. A fuel control system (1) according to any of claims 1-5, wherein the fuel controller (5) is further adapted to modify the fuel flow rate injected by the at least one fuel injector (7) considering the sensed values.

7. A fuel control system (1) according to any of the preceding claims, wherein comprises a plurality of fuel injectors (7), and wherein the fuel controller (5) is adapted to individually control the fuel flow rate of each one of the injectors (7).

8. A fuel control system (1) according to any of the preceding claims, wherein the fuel pressure (11) and/or the fuel temperature sensors (12) are coupled to an output of the fuel pump (9) or to a pipeline (17) that carries the pumped fuel to the at least one fuel injector (7).

9. A fuel control system (1) according to any of the preceding claims, wherein the fuel pump (9) is a mechanical or an electrical pump, and wherein if the high pressure fuel pump (9) is a mechanical pump, said pump is mechanically driven by the gearbox (2).

10. A fuel control system (1) according to claim 9, wherein the mechanical high pressure fuel pump (9) is mechanically driven by the gearbox (2).

11. A fuel control system (1) according to claim 9, wherein the electrical fuel pump (9) is placed apart from the gearbox (2).

12. A fuel control system (1) according to any of the preceding claims, wherein further comprises a linear motor, and wherein the fuel pump (9) is driven by said linear motor.

13. A fuel control system (1) according to any of the preceding claims, wherein the at least one fuel pump (9) is integrated into each injector (7) of the at least one fuel injector (7).

14. An aircraft comprising a fuel control system (1) according to any of the preceding claims.

## Patentansprüche

1. Kraftstoffregelsystem (1) für ein Gasturbinentriebwerk eines Luftfahrzeugs, mit:
- einem Triebwerk (18) mit einem Getriebe (2) und einer Brennkammer (6),
- einem Kraftstofftank (3) zur Aufbewahrung von Kraftstoff,
- einer Hochdruck-Kraftstoffpumpe (9) zum Pumpen von Kraftstoff aus dem Kraftstofftank (3) zu der Brennkammer (6), und
- einem Kraftstoffdrucksensor (11) der zur Erfassung des Drucks des gepumpten Kraftstoffs angeordnet ist,
**dadurch gekennzeichnet, dass** das System (1) ferner aufweist:
- mindestens eine elektrisch gesteuerte Kraftstoffeinspritzdüse (7), um eine Flussmenge des gepumpten Kraftstoffs in die Brennkammer (6) einzuspritzen,
- einen Kraftstofftemperatursensor (12), der zur Erfassung der Temperatur des gepumpten Kraftstoffs angeordnet ist, und
- einen Kraftstoffregler (5), der elektrisch mit den Kraftstoffdruck- und Temperatursensoren (11, 12) gekoppelt ist, um die Kraftstoffdichte gemäß den erfassten Werten zu berechnen,
- wobei der Kraftstoffregler (5) elektrisch mit der mindestens einen Kraftstoffeinspritzdüse (7) gekoppelt ist, um die Kraftstoffflusseinspritzmenge zu bestimmen,
- wobei der Kraftstoffregler (5) dazu ausgebildet ist, die Menge des eingespritzten Kraftstoffs in Abhängigkeit von der Kraftstoffdichte und der Kraftstoffflusseinspritzmenge zu berechnen,
- wobei der Kraftstoffregler (5) elektrisch mit der Kraftstoffpumpe (9) gekoppelt ist, um einen Pumpenausgangsdruckwert in Abhängigkeit von der Menge des eingespritzten Kraftstoffs zu bestimmen, so dass der mindestens einen Kraftstoffeinspritzdüse (7) ein konstanter Kraftstoffdruckwert zugeführt wird, um einen konstanten Kraftstoffeinspritzdruck in die Brennkammer (6) einzuspritzen, und
- wobei der Kraftstoffregler (5) ferner dazu ausgebildet ist, die Kraftstoffflusseinspritzmenge der mindestens einen Kraftstoffeinspritzdüse (7) zu regulieren, um die mindestens eine Kraftstoffeinspritzdüse (7) mit einem konstanten Kraftstoffdruckwert zu versorgen.

2. Kraftstoffregelsystem (1) nach Anspruch 1, wobei das Triebwerk (18) eine Welle aufweist, und wobei das System (1) einen mit dem Triebwerk (18) gekoppelten Triebwerksdrehzahlsensor (14) aufweist, um den momentanen Drehzahlwert der Triebwerkswelle zu erfassen, und wobei der Kraftstoffregler (5) dazu ausgebildet ist, momentane Triebwerkslastinformationen (13) zu empfangen und den Kraftstoffpumpenausgangsdruckwert unter Berücksichtigung der Last- und Drehzahlwerte zu modifizieren, um die mindestens eine Kraftstoffeinspritzdüse (7) mit einem konstanten Kraftstoffdruckwert zu versorgen.

3. Kraftstoffregelsystem (1) nach Anspruch 2, wobei der Kraftstoffregler (5) weiterhin dazu ausgebildet ist, den Arbeitszyklus der Kraftstoffpumpe (9) entsprechend den Last- und Drehzahlwerten derart zu verändern, dass die mindestens eine Kraftstoffeinspritzdüse (7) mit einem konstanten Kraftstoffdruckwert versorgt wird.

4. Kraftstoffregelsystem (1) nach einem der Ansprüche 2 - 3, wobei die Kraftstoffpumpe (9) Einlassventile zum Aufnehmen des zu pumpenden Kraftstoffs aufweist, und wobei der Kraftstoffregler (5) ferner dazu ausgebildet ist, den Kraftstoffzufluss durch mindestens eines der Kraftstoffpumpeneinlassventile gemäß den Last- und/oder Drehzahlwerten zu reduzieren.

5. Kraftstoffregelsystem (1) nach einem der vorhergehenden Ansprüche, mit ein Einlassluftströmungsdruck- (15) und einem Lufttemperatursensor (16), die beide in einem Triebwerkslufteinlass angeordnet sind, um Druck- und Temperaturwerte eines Einlassluftstroms zu erfassen, und wobei der Kraftstoffregler (5) dazu ausgebildet ist, den Kraftstoffpumpenausgangsdruckwert unter Berücksichtigung der Einlassluftströmungsdruck- und Temperaturwerte zu ändern, um die mindestens einen Kraftstoffeinspritzdüse (7) mit einem konstanten Kraftstoffdruckwert zu versorgen.

6. Kraftstoffregelsystem (1) nach einem der Ansprüche 1 - 5, wobei der Kraftstoffregler (5) ferner dazu ausgebildet ist, den von der mindestens einen Kraftstoffeinspritzdüse (7) eingespritzten Kraftstoffdurchsatz unter Berücksichtigung der erfassten Werte zu verändern.

7. Kraftstoffregelsystem (1) nach einem der vorhergehenden Ansprüche, mit einer Vielzahl von Kraftstoffeinspritzdüsen (7), und wobei der Kraftstoffregler (5) dazu ausgebildet ist, den Kraftstoffdurchsatz einer jeden Einspritzdüse (7) individuell zu regeln.

8. Kraftstoffregelsystem (1) nach einem der vorhergehenden Ansprüche, wobei die Kraftstoffdruck- (11) und/oder Kraftstofftemperatursensoren (12) an einen Auslass der Kraftstoffpumpe (9) oder an eine Rohrleitung (17), die den gepumpten Kraftstoff zu der mindestens einen Kraftstoffeinspritzdüse (7) führt, gekoppelt sind.

9. Kraftstoffregelsystem (1) nach einem der vorhergehenden Ansprüche, wobei die Kraftstoffpumpe (9) als mechanische oder elektrische Pumpe ausgebildet ist, und wobei für den Fall dass die Hochdruck-Kraftstoffpumpe (9) als mechanische Pumpe ausgebildet ist, die Pumpe mittels des Getriebes (2) mechanisch angetrieben wird.

10. Kraftstoffregelsystem (1) nach Anspruch 9, wobei die mechanische Hochdruck-Kraftstoffpumpe (9) mittels des Getriebes (2) mechanisch angetrieben wird.

11. Kraftstoffregelsystem (1) nach Anspruch 9, wobei die elektrische Kraftstoffpumpe (9) separat von dem Getriebe (2) angeordnet ist.

12. Kraftstoffregelsystem (1) nach einem der vorhergehenden Ansprüche, mit einem Linearmotor, wobei die Kraftstoffpumpe (9) von dem Linearmotor angetrieben wird.

13. Kraftstoffregelsystem (1) nach einem der vorhergehenden Ansprüche, wobei die mindestens eine Kraftstoffpumpe (9) in jede der mindestens einen Kraftstoffeinspritzdüsen (7) integriert ist.

14. Luftfahrzeug mit einem Kraftstoffregelsystem (1) nach einem der vorhergehenden Ansprüche.

## Revendications

1. Système de commande de carburant (1) pour un moteur à turbine à gaz d'un aéronef comprenant :
- un moteur (18) ayant une boîte d'engrenages (2) et une chambre de combustion (6),
- un réservoir de carburant (3) pour contenir du carburant,
- une pompe à carburant haute-pression (9) pour pomper du carburant depuis le réservoir de carburant (3) vers la chambre de combustion (6),
et
- un capteur de pression de carburant (11) placé pour détecter la pression du carburant pompé,
**caractérisé en ce que** le système (1) comprend en outre
- au moins un injecteur de carburant à commande électrique (7) pour injecter un débit du carburant pompé dans la chambre de combustion (6),
- un capteur de température de carburant (12) placé pour détecter la température du carburant pompé, et
- un dispositif de commande de carburant (5) électriquement accouplé aux capteurs de température et de pression de carburant (11, 12) afin de calculer la densité de carburant en fonction des valeurs détectées,
- dans lequel le dispositif de commande de carburant (5) est électriquement accouplé à l'au moins un injecteur de carburant (7) pour déterminer le débit d'injection de carburant,
- dans lequel le dispositif de commande de carburant (5) est adapté pour calculer la quantité du carburant injecté, en fonction de la densité de carburant et du débit d'injection de carburant,
- dans lequel le dispositif de commande de carburant (5) est électriquement accouplé à la pompe à carburant (9) pour établir une valeur de pression de sortie de pompe, en fonction de la quantité du carburant injecté, de telle sorte qu'une valeur de pression de carburant constante est apportée à l'au moins un injecteur de carburant (7) afin d'injecter une pression d'injection de carburant constante dans la chambre de combustion (6), et
- dans lequel le dispositif de commande de carburant (5) est en outre adapté pour réguler le débit d'injection de carburant de l'au moins un injecteur de carburant (7) pour alimenter l'au moins un injecteur de carburant (7) avec une valeur de pression de carburant constante.

2. Système de commande de carburant (1) selon la revendication 1, dans lequel le moteur (18) comprend un arbre, et dans lequel le système (1) comprend en outre un capteur de vitesse de moteur (14) accouplé au moteur (18) pour détecter une valeur de vitesse instantanée de l'arbre du moteur, et dans lequel le dispositif de commande de carburant (5) est en outre adapté pour recevoir des informations de charge du moteur instantanée (13) et pour modifier la valeur de pression de sortie de la pompe à carburant en considérant les valeurs de charge et de vitesse pour apporter une valeur de pression de carburant constante à l'au moins un injecteur de carburant (7).

3. Système de commande de carburant (1) selon la revendication 2, dans lequel le dispositif de commande de carburant (5) est en outre adapté pour modifier le cycle de service de la pompe à carburant (9) en fonction des valeurs de charge et de vitesse pour qu'une valeur de pression de carburant constante soit apportée à l'au moins un injecteur de carburant (7).

4. Système de commande de carburant (1) selon l'une quelconque des revendications 2-3, dans lequel la pompe à carburant (9) comprend des clapets d'entrée pour recevoir le carburant à pomper, et dans lequel le dispositif de commande de carburant (5) est en outre adapté pour réduire l'écoulement de carburant d'entrée de pompe à travers l'au moins un desdits clapets d'entrée de pompe à carburant en fonction des valeurs de charge et/ou de vitesse.

5. Système de commande de carburant (1) selon l'une quelconque des revendications précédentes, comprenant en outre un capteur de pression d'écoulement d'air d'entrée (15) et un capteur de température d'air (16), tous les deux situés dans une entrée d'air de moteur pour détecter respectivement des valeurs de pression et de température d'un écoulement d'air d'entrée, et dans lequel le dispositif de commande de carburant (5) est en outre adapté pour modifier la valeur de pression de sortie de pompe à carburant en considérant les valeurs de pression et de température d'écoulement d'air d'entrée, pour apporter une valeur de pression de carburant constante à l'au moins un injecteur de carburant (7).

6. Système de commande de carburant (1) selon l'une quelconque des revendications 1-5, dans lequel le dispositif de commande de carburant (5) est en outre adapté pour modifier le débit de carburant injecté par l'au moins un injecteur de carburant (7) en considérant les valeurs détectées.

7. Système de commande de carburant (1) selon l'une quelconque des revendications précédentes, comprenant une pluralité d'injecteurs de carburant (7), et dans lequel le dispositif de commande de carburant (5) est adapté pour contrôler individuellement le débit de carburant de chacun des injecteurs (7).

8. Système de commande de carburant (1) selon l'une quelconque des revendications précédentes, dans lequel les capteurs de pression de carburant (11) et/ou de température de carburant (12) sont accouplés à une sortie de la pompe à carburant (9) ou à une conduite (17) qui transporte le carburant pompé jusqu'à l'au moins un injecteur de carburant (7).

9. Système de commande de carburant (1) selon l'une quelconque des revendications précédentes, dans lequel la pompe à carburant (9) est une pompe mécanique ou électrique, et dans lequel si la pompe à carburant haute-pression (9) est une pompe mécanique, ladite pompe est mécaniquement entraînée par la boîte d'engrenages (2).

10. Système de commande de carburant (1) selon la revendication 9, dans lequel la pompe à carburant haute-pression mécanique (9) est mécaniquement entraînée par la boîte d'engrenages (2).

11. Système de commande de carburant (1) selon la revendication 9, dans lequel la pompe à carburant électrique (9) est placée à l'écart de la boîte d'engrenages (2).

12. Système de commande de carburant (1) selon l'une quelconque des revendications précédentes, comprenant en outre un moteur linéaire, et dans lequel la pompe à carburant (9) est entraînée par ledit moteur linéaire.

13. Système de commande de carburant (1) selon l'une quelconque des revendications précédentes, dans lequel l'au moins une pompe à carburant (9) est intégrée dans chaque injecteur (7) de l'au moins un injecteur de carburant (7).

14. Aéronef comprenant un système de commande de carburant (1) selon l'une quelconque des revendications précédentes.
